# EUROPEAN PATENT APPLICATION

(11) **EP 1 906 629 A1**
(43) Date of publication of application: **02.04.2008**
(21) Application number: 07253883.8
(22) Date of filing: 01.10.2007
(51) Int. Cl.: H04L 29/08

(54) **System and method for utilizing mobile station information in a communication system**

(30) Priority: 30.09.2006 KR 20060096689
(71) Applicant: Samsung Electronics Co., Ltd., Suwon-si, Gyeonggi-Do (KR)
(72) Inventor: Kim, Young-Ky, c/o Samsung Electronics Co. Ltd., Suwon-si, Gyeonggi-do (KR); Park, Joon-Ho, c/o Samsung Electronics Co. Ltd., Suwon-si, Gyeonggi-do (KR); Moon, Sang-Jun, c/o Samsung Electronics Co. Ltd., Suwon-si, Gyeonggi-do (KR); Lee, Sung Won, c/o Samsung Electronics Co. Ltd., Suwon-si, Gyeonggi-do (KR); Kim, Dae-Seok, c/o Samsung Electronics Co. Ltd., Suwon-si, Gyeonggi-do (KR)
(74) Representative: Boakes, Jason Carrington

(57) **Abstract**

A system and method for utilizing MS information in a communication system are provided, in which an MS, an MS information server stores MS information about the at least one MS, a content server receives the MS information from the MS information server, upon receipt of the request for the MS capability-based content service from the at least one MS and provides the MS capability-based content service using the MS information to the at least one MS, and an USI server transmits the request for the MS capability-based content service to the content server, receives the MS information from the MS information server, upon receipt of a request for the MS information from the content server, and provides the MS information to the content server.

## Description

### TECHNICAL FIELD OF THE INVENTION

The present application generally relates to a communication system. More particularly, the present invention relates to a system and method for utilizing Mobile Station (MS) information in a communication system.

### BACKGROUND OF THE INVENTION

Providing services with diverse Quality of Service (QoS) requirements to users is an active study area for a future-generation communication system called a 4^{th} Generation (4G) communication system. Particularly, active research is being conducted on the provisioning of high-speed service by ensuring mobility and QoS to Broadband Wireless Access (BWA) communication systems such as Wireless Local Area Network (WLAN) and Wireless Metropolitan Area Network (WMAN).

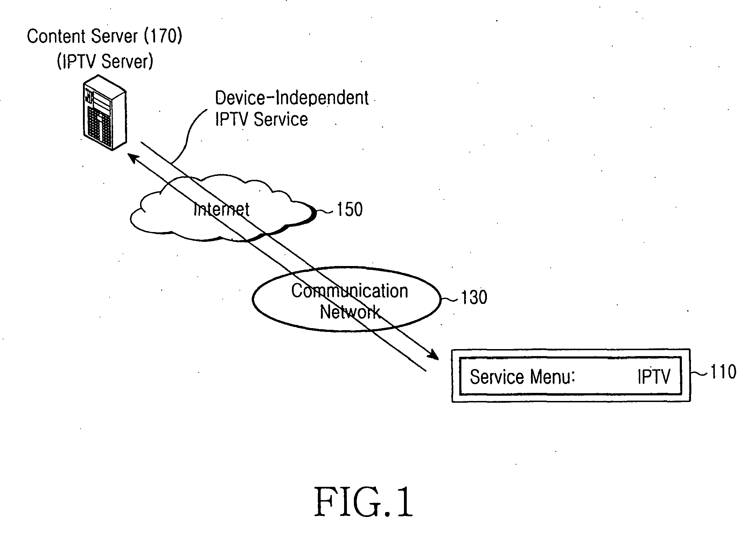

Along with the evolution of communication systems, the communication systems are now able to provide a variety of contents to MSs over the Internet. With reference to FIGURE 1, a communication system for providing content services to MSs will be described.

FIGURE 1 illustrates a conventional communication system for providing content services.

Referring to FIG. 1, an MS 110 requests a content service to a content server 170 over a communication network 130.

The communication network 130 transmits the content service request to the content server 170 over an Internet 150. The content server 170 provides the requested content service to the MS 110 through the Internet 150 and the communication network 130.

Assuming that the requested content service is an Internet Protocol TeleVision (IPTV) service, the content server 170 can be an IPTV server, as it provides the IPTV service to the MS 110.

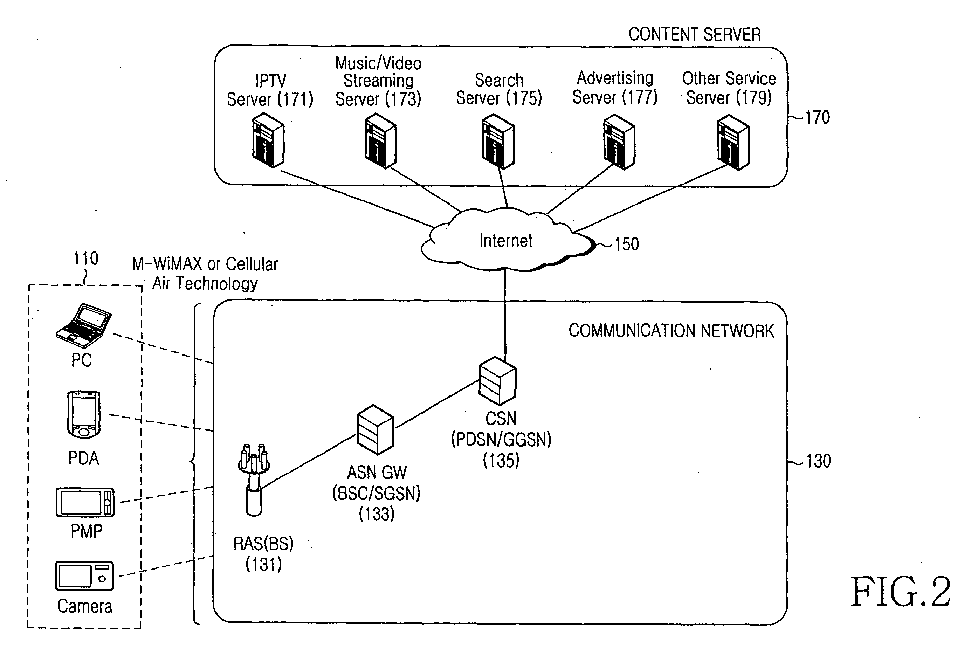

The configuration of the communication system that provides the content service will be detailed with reference to FIG. 2.

FIGURE 2 illustrates the configuration of the conventional communication system for providing content services.

Referring to FIGURE 2, the communication system includes the MS 110, the communication network 130, the Internet 150, and the content server 170.

The MS 110 receives a service over the communication network 130 and provides the received service to its user.

The communication network 130 is operated by, for example, a network operator. It includes a Radio Access Station (RAS) 131, an Access Service Network GateWay (ASN GW) 133, and a Connectivity Service Network (CSN) 135.

The RAS 131 covers a service area of a predetermined size (e.g., a cell) and provides a communication service to the MS 110 within the cell. The RAS 131 handles over-the-air physical-layer connectivity to the MS 110. A Base Station (BS) may substitute for the RAS 131.

The ASN GW 133, which is connected to the RAS 131, takes charge of handoff and power control and handles Medium Access Control (MAC)-layer connectivity. A Base Station Controller (BSC) or a Serving GPRS Support Node (SGSN) can be used instead of the ASN GW 133.

The CSN 135, connected to the ASN GW 133, controls a plurality of RASs 131. The CSN 135 is connected to the Internet 150 and provides high-speed data communication services and interfaces the ASN GW 133 with the Internet 150. The CSN 135 may be replaced with a Packet Data Serving Node (PDSN), a Gateway GPRS Support Node (GGSN), or the like.

The Internet 150 connects the content server 170 to the communication network 130 and provides a content service received from the content server 170 to the MS 110 over the communication network 130.

The content server 170 is operated by a content provider or an Internet service provider. The content server 170 includes, for example, an IPTV server 171, a music/video streaming server 173, a search server 175, an advertising server 177, and an other-service server 179.

Technologies for receiving services at MSs from the communication system have been ceaselessly developed. Along with the trend toward multi-function and diversification as well as portability, the MS 110 has evolved to provide real-time service of data and video beyond voice call. Furthermore, the communication network 130 can even provide content services received from a legacy wired network over the Internet 150 to the MS 110. The MS 110 can be a cellular phone, a Personal Digital Assistant (PDA), a notebook Personal Computer (hereinafter, referred to as note-PC), a Personal Multimedia Player (PMP), a Hand Held Phone (HHP), a smart phone, a digital communication device, or a digital camera. Besides various kinds of terminals with a communication function, the MS 110 can also be any of the new MSs that will emerge owing to increased user demands and accelerated technology development.

Assuming that the communication system provides an IPTV service to the MS 110, the MS 110 requests an MS capability-based IPTV service to a content server, for example, the IPTV server 171. However, the IPTV server 171 cannot acquire MS information about the MS 110 from the communication network 130.

For instance, if an MS that receives the IPTV service is a note-PC with a resolution of 640x480 and a user wants to receive the IPTV service through a PDA with a resolution of 240x320 instead of the note-PC, he should customize a format set for the resolution of the note-PC to meet the resolution of the PDA by manipulating the PDA.

As a result, the MS does not receive the content service based on its capability.

The content server has no knowledge of MS information in relation to a cont ent service request received from each MS. Therefore, it cannot provide an MS capa bility-based content service to the MS.

### SUMMARY OF THE INVENTION

To address the above-discussed deficiencies of the prior art, it is a primary object to provide at least the advantages described below. Accordingly, an aspect of exemplary embodiments of the present invention is to provide a system and method for utilizing MS information in a communication system.

Another aspect of exemplary embodiments of the present invention is to provide a system and method for utilizing MS information so as to provide an MS with an MS capability-based service in a communication system.

A further aspect of exemplary embodiments of the present invention is to provide a system and method for utilizing MS information so as to provide each MS with a service based on its capability in a content server of a communication system.

In accordance with an aspect of exemplary embodiments of the present invention, there is provided a system for utilizing MS information in a communication system, in which an MS, an MS information server stores MS information about the at least one MS, a content server receives the MS information from the MS information server, upon receipt of the request for the MS capability-based content service from the at least one MS and provides the MS capability-based content service using the MS information to the at least one MS, and an USI server transmits the request for the MS capability-based content service to the content server, receives the MS information from the MS information server, upon receipt of a request for the MS information from the content server, and provides the MS information to the content server.

In accordance with still another aspect of exemplary embodiments of the present invention, there is provided a system for utilizing MS information in a communication system, in which upon receipt of MS information about an MS from a content server, an USI server acquires the MS information from an MS information server that stores the MS information, and transmits the MS information to the content server.

In accordance with still further aspect of exemplary embodiments of the present invention, there is provided a method for utilizing MS information in a communication system, in which an MS transmits a content service request message requesting an MS capability-based content service to a content server, the content server requests MS information about the MS to an USI server, the USI server acquires the MS information from an MS information server that stores the MS information and transmits the MS information to the content server, and the content server provides the MS capability-based content service using the MS information to the MS.

### BRIEF DESCRIPTION OF THE DRAWINGS

The above and other objects, features and advantages of certain exemplary embodiments of the present invention will be more apparent from the following detailed description taken in conjunction with the accompanying drawings, in which:
FIGURE 1 illustrates a conventional communication system for providing content services;
FIGURE 2 illustrates the configuration of the conventional communication system for providing content services;
FIGURE 3 illustrates a communication system for providing content services according to an exemplary embodiment of the present invention;
FIGURE 4 illustrates the configuration of the communication system for providing content services according to the exemplary embodiment of the present invention;
FIGURE 5 illustrates an interface of an MS for receiving a content service according to an exemplary embodiment of the present invention;
FIGURE 6 is a diagram illustrating a signal flow for providing a content service in the communication system according to an exemplary embodiment of the present invention;
FIGURE 7 is a diagram illustrating a signal flow for providing a content service in the communication system according to another exemplary embodiment of the present invention; and
FIGURE 8 is a diagram illustrating a signal flow for providing a content service in the communication system according to a third exemplary embodiment of the present invention.

Throughout the drawings, the same drawing reference numerals will be und erstood to refer to the same elements, features and structures.

### DETAILED DESCRIPTION OF THE INVENTION

The matters defined in the description such as a detailed construction and elements are provided to assist in a comprehensive understanding of exemplary embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

Exemplary embodiments of the present invention provide a system and method for utilizing mobile station (MS) information in a communication system. In accordance with the present invention, an MS (or device) capability server stores MS information about each MS and provides the MS information to a content server. If an MS requests a content service to the content server, the content server provides the MS with the content service based on MS information about the MS.

The MS can be any of a cellular phone, a PDA, a note-PC, an Ultra Mobile Personal Computer (UMPC), a PMP, an HHP, a smart phone, a digital communication device, and a digital camera. The term "MS" is a generic name that covers a variety of devices with a communication function.

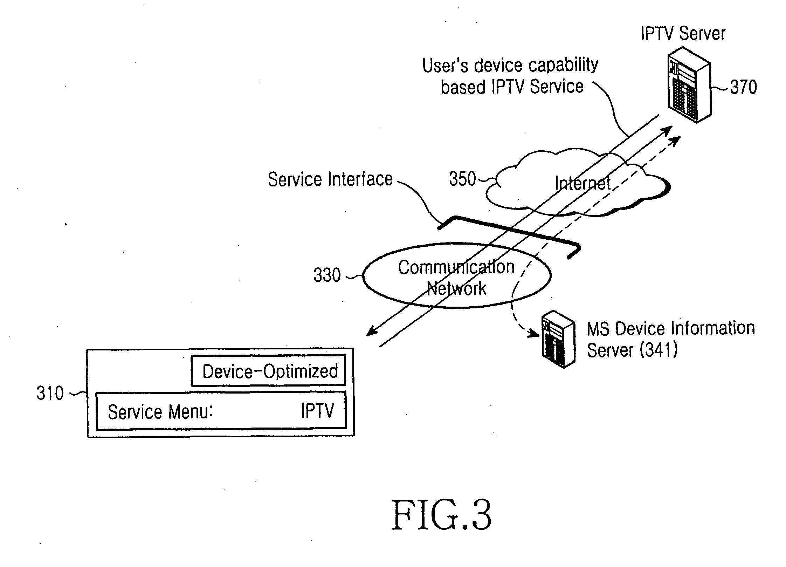

FIGURE 3 illustrates a communication system for providing content services according to an exemplary embodiment of the present invention.

Referring to FIGURE 3, a mobile station (MS) 310 requests a content service based on its mobile station (MS) information to a content server 370 over a communication network 330. The MS information is information about characteristics of the MS 310, including information about the operating system, Coder-Decoder (CODEC), resolution, type, display unit, and memory of the MS 310, for example. The type information identifies a PDA, note-PC, UMPC, or the like.

The communication network 330 transmits the content service request to the content server 370 over an Internet 350. The content server 370 provides the requested content service to the MS 310 over the Internet 350 and the communication network 330.

In addition, the communication network 330 provides the MS information about the MS 310 received from an MS(Device) information server 341 to the content server 370.

Assuming that the requested content service is an IPTV service, the content server 370 requests the MS information to the communication network 330 and receives it. Then, the content server 370 optimizes the content service based on the MS information and provides the optimized content service to the MS 310. Thus, the MS 310 can receive the MS capability-based content service from the content server 370.

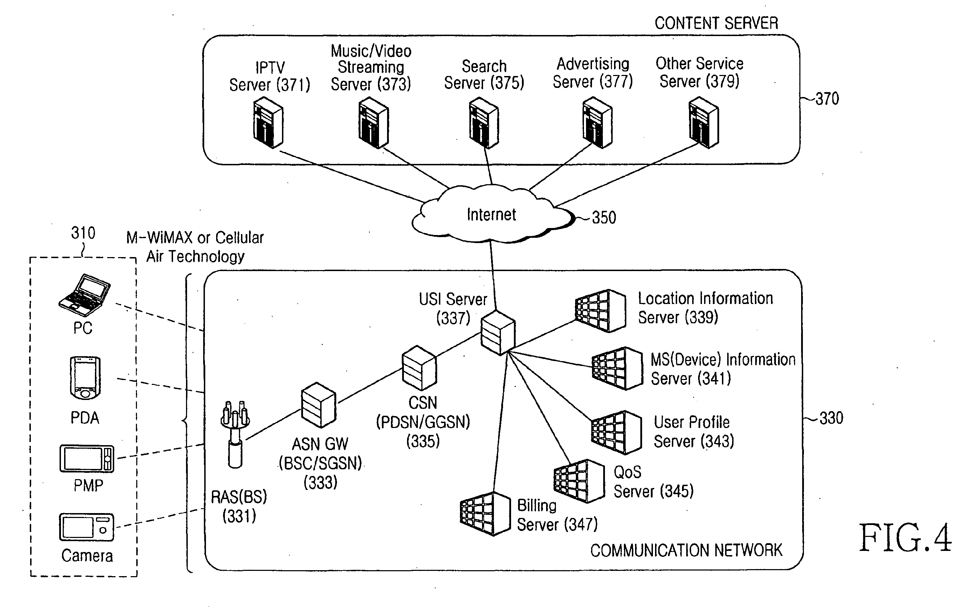

As the content server 370 provides the requested content service, i.e. an IPTV service to the MS 310, it can be an IPTV server. The configuration of the communication system that provides the content service to the MS will be detailed with reference to FIGURE 4.

FIGURE 4 illustrates the configuration of the communication system for providing content services according to the exemplary embodiment of the present invention.

Referring to FIGURE 4, the communication system includes the MS 310, the communication network 330, the Internet 350, and the content server 370.

The MS 310 receives a service over the communication network 330 and provides the received service to its user. The MS 310 can request a content service to the content server 370 over the communication network 330. It can also request an MS capability-based content service. In this case, the content server 370 generates the content service based on MS information about the MS 310 and provides it to the MS 310.

The communication network 330 is operated by, for example, a network operator. It includes a RAS 331, an ASN GW 333, a CSN 335, and an Universal Service Interface (USI) server 337.

The RAS 331 covers a service area of a predetermined size (e.g., a cell) and provides a communication service to the MS 310 within the cell. The RAS 331 handles over-the-air physical-layer connectivity to the MS 310. A BS may substitute for the RAS 331.

The ASN GW 333, which is connected to the RAS 331, takes charge of handoff and power control and handles MAC-layer connectivity. A BSC or an SGSN may be used instead of the ASN GW 333.

The CSN 335, connected to the ASN GW 333, controls a plurality of RASs 331. The CSN 335 is connected to the Internet 350 through the USI server 337 and provides high-speed data communication services and interfaces the ASN GW 333 with the Internet 350. The CSN 335 may be replaced with a PDSN, a GGSN, or the like.

The communication network 330 includes a location information server 339, an MS information server 341, a user profile server 343, a QoS server 345, and a billing server 347.

The Internet 350 connects the content server 370 to the communication network 330 and provides a content service received from the content server 370 to the MS 310 over the communication network 330.

The location information server 339 manages location information about MSs. The MS information server 341 stores MS information about each MS capability-based, including information about the operating system, CODEC, resolution, MS type, display unit, and memory of the MS, for example.

The user profile server 343 stores user profiles, i.e. information about users that receive communication services through the communication network 330. A user profile includes, for example, the name, gender, address, age, and hobby of a user. The QoS server 345 stores information about of the QoS classes of MSs and the QoS classes of services provided to the MSs, and decides the QoS classes. The billing server 347 stores billing information about each MS.

The USI server 337 connects the location information server 339, the MS information server 341, the user profile server 343, the QoS server 345, and the billing server 347 to one another. Upon request of the content server 370, the USI server 337 provides information about resources of the communication network 330 and resources to the content server 370. The USI server 337 also interfaces between the Internet 350 and the communication network 330.

The content server 370 provides content services to the communication network 330 over the Internet 350.

The content server 370 is operated by a content provider or an Internet service provider. The content server 370 includes, for example, an IPTV server 371, a music/video streaming server 373, a search server 375, an advertising server 377, and an other-service server 379. Upon receipt of a request for an MS capability-based content service from the MS 310, the content server 370 receives MS information about the MS 310 through the USI server 337 of the communication network 330 and provides the content service based on the MS information to the MS 310.

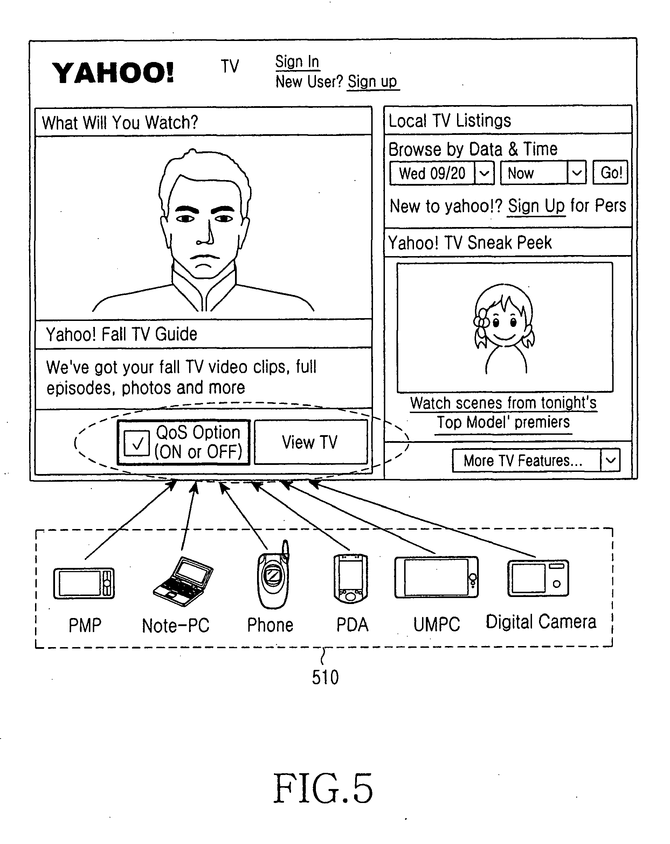

Since the content server 370 can utilize information of the communication network 330 through the USI server 337, it can provide an optimized content service to each MS. Now a description will be made of an interface of an MS that receives a content service, for example, an IPTV service with reference to FIGURE 5.

FIGURE 5 illustrates an interface of an MS for receiving a content service according to an exemplary embodiment of the present invention.

Referring to FIGURE 5, an MS 510 can be any of a PMP, note-PC, a cellular phone, a PDA, a UMPC, and a digital camera. The MS 510 can decide as to whether to receive an MS capability-based IPTV service. The MS 510 is provided with a device-aware option at its interface, for selection by a user. Depending on whether the user selects the device-aware option, the MS 510 can receive a normal IPTV service or an MS capability-based IPTV service according to the user selection.

If the user selects the device-aware option, that is, the device-aware option is On, the MS 510 receives a content service based on MS information about the MS 510. If the user does not select the device-aware option, that is, the device-aware option is Off, the MS 510 receives a normal content service.

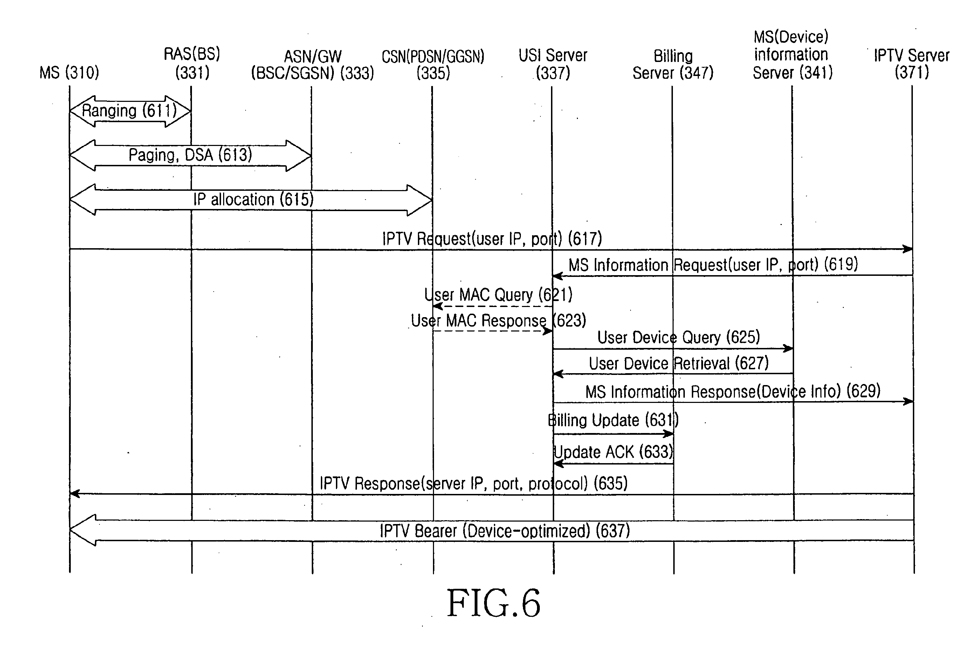

With reference to FIGURES 6, 7 and 8, operations for utilizing MS information in the communication system will be described below.

FIGURE 6 is a diagram illustrating a signal flow for providing a content service in the communication system according to an exemplary embodiment of the present invention.

Referring to FIGURE 6, the communication system includes the MS 310, the RAS 331, the ASN GW 333, the CSN 335, the USI server 337, the billing server 347, the MS information server 341, and the IPTV server 371. In the illustrated case of FIG. 6, the MS 310 intends to receive an IPTV service and the IPTV server 371 provides the IPTV service.

The MS 310 performs a ranging procedure with the RAS 331 in step 611 and then a paging procedure and a Dynamic Service Addition (DSA) procedure with the ASN/GW 333 in step 613. In step 615, the MS 311 performs an IP allocation procedure with the CSN 335.

The MS 310 transmits an IPTV Request message to the IPTV server 371, requesting an MS capability-based IPTV service in step 617. The IPTV Request message includes IP information and port information about the MS 310.

In step 619, the IPTV server 371 transmits an MS Information Request message to the USI server 337, requesting MS information about the MS 310.

The USI server 337 transmits a User MAC Query message to the CSN 335 in step 621 and the CSN 335 replies to the USI server 337 with a User MAC Response message in step 623.

The USI server 337 acquires MAC information about the MS 310 from the User MAC Response message. Then the USI server 337 transmits a User Device Query message to the MS information server 341 in relation to the MS Information Request message in order to acquire the MS information in step 625.

The MS information server 341 transmits a User Device Retrieval message in response to the User Device Query message to the USI server 337 in step 627. The User Device Retrieval message includes the requested MS information, for example, information about the operating system, CODEC, resolution, MS type, display unit, and memory of the MS 310.

The USI server 337 transmits an MS Information Response message for the MS Information Request message to the IPTV server 371 in step 629. The USI server 337 acquires the MAC information about the MS 310 in steps 621 and 623 and the MS information about the MS 310 in steps 625 and 627. The USI server 337 uses the MAC information and the MS information in generating the MS Information Response message.

The IPTV server 371 acquires the MS information in relation to the content service request and generates a format for the MS capability-based content service using the MS information. The IPTV server 371 transmits an IPTV Response message in the format for the IPTV Request message to the MS 310 in step 635. The IPTV Response message includes IP information, port information, and protocol information about the content server, i.e. the IPTV server 371.

In step 637, the IPTV server 371 transmits the content service, i.e. the IPTV service to the MS 310 over the communication network.

The USI server 337 transmits a Billing Update message to the billing server 347 so as to calculate the charge of the MS capability-based IPTV service in step 631.

The billing server 347 updates billing information about the MS 310 and transmits an update ACKnowledgement (ACK) message to the USI server 337 in step 633.

For the billing information update in steps 631 and 633, the IPTV server 371 transmits a Billing Update Request message to the USI server 337 in relation to the provisioning of the MS information.

After the billing information update, the USI server 337 replies to the IPTV server 371 with a Billing Update Response message. Without exchanging the Billing Update Request message and the Billing Update Response message between the IPTV server 371 and the USI server 337, the operations of the USI server 337 and the billing server 347 in steps 631 and 633 can suffice for the billing information update.

Steps 631 and 633 are given as an example of billing information update.

To ensure security, the MS Information Request message or the MS Information Response message can be transmitted in steps 625 or 627 by Hyper Text Transfer Protocol (HTTP). Messages can be exchanged in extensible Markup Language (XML) between the USI server 337 and the IPTV server 371, for the purpose of database mapping.

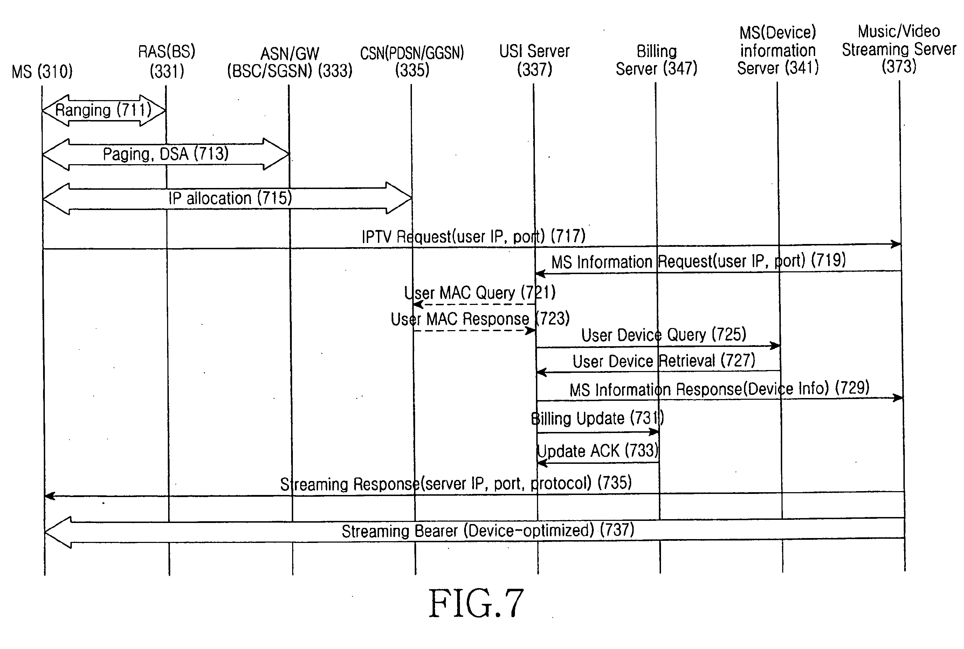

FIGURE 7 is a diagram illustrating a signal flow for providing a content service in the communication system according to another exemplary embodiment of the present invention.

Referring to FIGURE 7, the communication system includes the MS 310, the RAS 331, the ASN GW 333, the CSN 335, the USI server 337, the billing server 347, the MS information server 341, and the music/video streaming server 373. In the illustrated case of FIGURE 7, the MS 310 intends to receive a music/video streaming service and a content server that provides the content service is the music/video streaming server 373.

The MS 310 performs a ranging procedure with the RAS 331 in step 711 and then a paging procedure and a DSA procedure with the ASN/GW 333 in step 713. In step 715, the MS 311 performs an IP allocation procedure with the CSN 335.

The MS 310 transmits a Streaming Request message to the music/video streaming server 373, requesting an MS capability-based music/video streaming service in step 717. The Streaming Request message includes IP information and port information about the MS 310.

In step 719, the music/video streaming server 373 transmits an MS Information Request message to the USI server 337.

The USI server 337 transmits a User MAC Query message to the CSN 335 in step 721 and the CSN 335 replies to the USI server 337 with a User MAC Response message in step 723.

The USI server 337 acquires MAC information about the MS 310 from the User MAC Response message. Then the USI server 337 transmits a User Device Query message to the MS information server 341 in relation to the MS Information Request message in order to acquire MS information about the MS 310 in step 725.

The MS information server 341 transmits a User Device Retrieval message in response to the User Device Query message to the USI server 337 in step 727. The User Device Retrieval message includes the requested MS information, for example, information about the operating system, CODEC, resolution, MS type, display unit, and memory of the MS 310.

The USI server 337 transmits an MS Information Response message for the MS Information Request message to the music/video streaming server 373 in step 729. The USI server 337 acquires the MAC information about the MS 310 in steps 721 and 723 and the MS information about the MS 310 in steps 725 and 727. The USI server 337 uses the MAC information and the MS information in generating the MS Information Response message.

The music/video streaming server 373 acquires the MS information in relation to the content service request and generates a format for the MS capability-based content service using the MS information. The music/video streaming server 373 transmits a Streaming Response message in the format to the MS 310 in response to the Streaming Request message in step 735. The Streaming Response message includes IP information, port information, and protocol information about the content server, i.e. the music/video streaming server 373.

In step 737, the music/video streaming server 373 transmits the content service, i.e. the music/video streaming service to the MS 310 over the communication network.

The USI server 337 transmits a Billing update message to the billing server 347 so as to calculate the charge of the MS capability-based music/video streaming service in step 731.

The billing server 347 updates billing information about the MS 310 and transmits an Update ACK message to the USI server 337 in step 733.

For the billing information update in steps 731 and 733, the music/video streaming server 373 transmits a Billing Update Request message to the USI server 337.

After the billing information update, the USI server 337 replies to the music/video streaming server 373 with a Billing Update Response message. Without exchanging the Billing Update Request message and the Billing Update Response message between the music/video streaming server 373 and the USI server 337, the operations of the USI server 337 and the billing server 347 in steps 731 and 733 can suffice for the billing information update.

Steps 731 and 733 are given as an example of billing information update.

To ensure security, the MS Information Request message or the MS Information Response message can be transmitted by HTTP in step 725 or 727. Messages can be exchanged in XML between the USI server 337 and the music/video streaming server 373, for the purpose of database mapping.

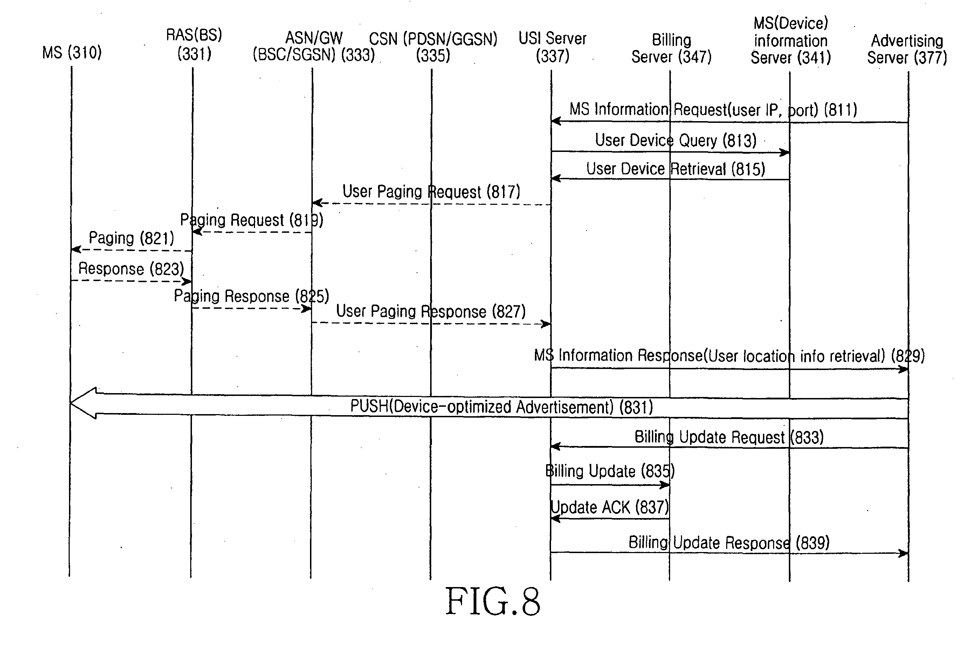

FIGURE 8 is a diagram illustrating a signal flow for providing a content service in the communication system according to a third exemplary embodiment of the present invention.

Referring to FIGURE 8, the communication system includes the MS 310, the RAS 331, the ASN GW 333, the CSN 335, the USI server 337, the billing server 347, the MS information server 341, and the advertising server 377. In the illustrated case of FIG. 8, the advertising server 377 provides a PUSH advertisement service to the MS 310.

To provide an advertisement service to the MS 310 based on MS information about the MS 310, the advertising server 377 transmits an MS Information Request message to the USI server 337 in step 811. The MS Information Request message includes IP information and port information about the MS 310. In addition, The MS Information Request message may include information indicating whether a paging procedure will be performed. If the information indicates that the paging procedure will be performed, the MS server 337 can perform a paging procedure with the MS 310.

The USI 337 transmits a User Device Query message to the MS information server 341 in order to acquire the MS information in step 813.

The MS information server 341 transmits a User Device Retrieval message for the User Device Query message to the USI server 337 in step 815. The User Device Retrieval message includes the requested MS information, for example, information about the operating system, CODEC, resolution, MS type, display unit, and memory of the MS 310.

If the MS Information Request message includes the information indicating that the paging procedure will be performed, the USI server 337 transmits a User Paging Request message to the ASN GW 333 in step 817.

In step 819, the ASN GW 333 transmits a Paging Request message to the RAS 331. The RAS 331 transmits a Paging message to the MS 310 in step 821. The MS 310 replies to the RAS 331 with a Response message in step 823. The RAS 331 transmits a Paging Response message for the Paging Request message to the ASN GW 333 in step 825.

The ASN GW 333 transmits a User Paging Response message for the User Paging Request message to the USI server 337 in step 827.

As described above, the USI server 337 can perform a paging procedure in steps 817 to 827. The paging procedure is not performed without the request of the advertising server 377.

The USI server 337 transmits an MS Information Response message for the MS Information Request message to the advertising server 377 in step 829. The USI server 337 uses MAC information and the MS information about the MS 310 in generating the MS Information Response message. The MS Information Response message may include location information about the MS so that the advertising server 377 can provide the advertisement service to the MS 310 based on the location information. In step 831, the advertising server 377 transmits the content service, i.e. the advertisement service to the MS 310 over the communication network.

The advertising server 377 transmits a Billing Update message to the USI server 337 in step 833.

The USI server 337 transmits a Billing Update message to the billing server 347 in order to calculate the charge of the MS information in step 835.

The billing server 347 updates billing information related to the MS information, and transmits an Update ACK message to the USI server 337 in step 837.

After the billing information update, the USI server 337 replies to the advertising server 377 with a Billing Update Response message in step 839. The Billing Update Response message includes the result of steps 837 and 839.

Without steps 833 and 839, the operation of the USI server 337 in steps 837 and 839 can suffice for the billing information update.

Steps 833 to 839 are given as an example of billing information update. The billing information update may precede the provisioning of the advertisement service in step 831.

To ensure security, the MS Information Request message or the MS Information Response message can be transmitted by HTTP in step 811 or 829. Messages can be exchanged in XML between the USI server 337 and the advertising server 377, for the purpose of database mapping.

While the USI server functions to connect the location information server, the MS information server, the user profile server, the QoS server, and the billing server to one another, it may incorporate them. Also, the USI server may be incorporated into the ASN GW or the CSN. The utilization of MS information in the content server with the aid of the USI server enables an MS capability-based content service.

As is apparent from the above description, an USI server is proposed for a communication system, which provides MS information to a content server operated by a content provider so that the content server provides the content service based on the MS capability to the MS. Therefore, the MS information is actively utilized in providing the content service.

While the invention has been shown and described with reference to certain exemplary embodiments of the present invention thereof, it will be understood by those skilled in the art that various changes in form and details may be made therein without departing from the spirit and scope of the present invention as defined by the appended claims and their equivalents.

## Claims

1. A system for utilizing Mobile Station (MS)information in a communication system, comprising:
an MS;
an MS information server for storing MS information about the the MS;
a content server for, upon receipt of the request for the MS capability-based content service from the MS, receiving the MS information from the MS information server, and providing the MS capability-based content service using the MS information of the at least one MS; and
an Universal Service Interface (USI) server for transmitting the request for the MS capability-based content service to the content server, receiving the MS information from the MS information server, upon receipt of a request for the MS information from the content server, and providing the MS information to the content server.

2. The system of claim 1, wherein the MS information is information about characteristics supported by the MS.

3. The system of claim 2, wherein the MS information includes at least one of Coder-Decoder (CODEC) information, resolution information, type information, display unit information, and memory information about the MS.

4. The system of claim 1, further comprising a billing server for storing billing information about the at least one MS upon request from the USI server, when the USI server provides the MS information to the content server.

5. The system of claim 1, wherein the content server transmits a first MS information request message to the USI server and receives a first MS information response message for the MS information request message from the USI server.

6. The system of claim 5, wherein the first MS information request message and the first MS information response message are at least one of Hyper Text Transfer Protocol (HTTP) messages and extensible Markup Language (XML) messages.

7. The system of claim 5, wherein the USI server transmits a second MS information request message to the MS information server in relation to the first MS information request message and acquires the MS information by receiving a second MS information response message for the second MS information request message user from the MS information server.

8. A system for utilizing Mobile Station (MS) information in a communication system, comprising:
an Universal Service Interface (USI) server for, upon receipt of MS information about a MS from a content server, acquiring the MS information from an MS information server that stores the MS information, and transmitting the MS information to the content server.

9. The system of claim 8, wherein the MS information is information about char acteristics supported by the MS.

10. The system of claim 9, wherein the MS information includes at least one of Coder-Decoder (CODEC) information, resolution information, type information, display unit information, and memory information about the MS.

11. The system of claim 8, wherein when the USI server transmits the MS inform ation to the content server, the USI server updates billing information associated with the transmission of the MS information in a billing server for managing the billing i nformation.

12. The system of claim 8, the content server for, if an MS capability-based content service is to be provided to an MS, requesting MS information about the MS to the Universal Service Interface (USI) server, receiving the MS information from the USI server, and providing the MS capability-based content service using the MS information to the MS.

13. The system of claim 12, wherein the content server acquires the MS informati on from an MS information server that stores the MS information via the USI server.

14. The system of claim 12, the MS for requesting a content service based on MS information about the MS to the content server and receiving the content service based on the MS information from the content server.

15. A method for utilizing Mobile Station (MS) information in a communication system, comprising:
transmitting a content service request message requesting an MS capability-based content service to a content server by an MS;
requesting MS information about the MS to an Universal Service Interface (USI) server by the content server;
acquiring the MS information from an MS information server that stores the MS information by the USI server;
transmitting the MS information to the content server from the USI server; and
providing the MS capability-based content service using the MS information to the MS.

16. The method of claim 15, wherein the MS information is information about characteristics supported by the MS.

17. The method of claim 16, wherein the MS information includes at least one of Coder-Decoder (CODEC) information, resolution information, type information, dis play unit information, and memory information about the MS.

18. The method of claim 15, further storing billing information about the MS in a billing server by the USI server, when the USI server provides the MS information to the content server.
